# EUROPEAN PATENT APPLICATION

(11) **EP 4 614 642 A1**
(43) Date of publication of application: **10.09.2025**
(21) Application number: 25162267.6
(22) Date of filing: 07.03.2025
(51) Int. Cl.: H01M 10/0525, H01M 10/0585, H01M 50/184, H01M 50/545

(54) **SECONDARY BATTERY**

(30) Priority: 08.03.2024 KR 20240033158
(71) Applicant: SAMSUNG SDI CO., LTD., Yongin-si, Gyeonggi-do 17084 (KR)
(72) Inventor: Hong, Suk Joon, Yongin-si, Gyeonggi-do 17084 (KR)
(74) Representative: Michalski Hüttermann & Partner Patentanwälte mbB

(57) **Abstract**

Disclosed is a secondary battery capable of reducing and/or eliminating an external terminal structure, thereby reducing the number of parts and production costs thereof. The secondary battery includes an electrode assembly including a first electrode plate and a second electrode plate, a first case mounted in a shape surrounding at least one surface of the electrode assembly and electrically connected to the first electrode plate, a second case mounted in a shape surrounding at least the opposite surface of the electrode assembly and electrically connected to the second electrode plate, and an insulating gasket located between the first case and the second case and made of an insulative material to block electrical connection between the first case and the second case.

## Description

### FIELD

The present disclosure relates to a secondary battery.

### BACKGROUND

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery may be used as a power source for driving a motor and a power storage battery in hybrid vehicles or electric vehicles. The secondary battery may include an electrode assembly having a positive electrode and a negative electrode, a case accommodating the electrode assembly, an electrode terminal connected to the electrode assembly, and the like.

The above-described information disclosed in the technology that serves as the background of the present disclosure is only for improving understanding of the background of the present disclosure and thus may include information that does not constitute the related art.

### SUMMARY

The present disclosure provides a secondary battery capable of reducing and/or eliminating an external terminal structure, thereby reducing the number of parts and production costs thereof.

These and other aspects and features of the present disclosure will be described in or will be apparent from the following description of embodiments of the present disclosure.

In order to accomplish the above objective, an exemplary secondary battery according to some embodiments of the present disclosure includes an electrode assembly including a first electrode plate and a second electrode plate, a first case surrounding a first surface of the electrode assembly and electrically connected to the first electrode plate, a second case surrounding a second surface of the electrode assembly and electrically connected to the second electrode plate, the second surface being opposite the first surface, and an insulating gasket located between the first case and the second case, the insulating gasket comprising an insulative material, wherein electrical connection between the first case and the second case is blocked.

In some embodiments, the secondary battery may further include a first connection tab connected to the first electrode plate and extending above the electrode assembly and/or in a direction towards the first case, such that the first connection tab is electrically connected to the first case.

In some embodiments, the secondary battery may further include a second connection tab connected to the second electrode plate and extending below the electrode assembly and/or in a direction towards the second case such that the second connection tab is electrically connected to the second case.

In some embodiments, the first connection tab may be connected to one side of the first electrode plate in the longitudinal direction of the first electrode plate.

In some embodiments, the second connection tab may be connected to one side of the second electrode plate in the longitudinal direction of the second electrode plate.

In some embodiments, the first connection tab may be welded to the first case, and the second connection tab may be welded to the second case.

In some embodiments, the second case may be disposed on the first case, and a first end portion of the second case may be located inside the first case.

In some embodiments, the insulating gasket may be surrounding the first end portion of the second case to block electrical connection between the first case and the second case.

In some embodiments, the insulating gasket may include an inner gasket abutting an inner surface of the second case, an outer gasket abutting an outer surface of the second case, and a connection gasket interconnecting the inner gasket and the outer gasket.

In some embodiments, the length of the outer gasket in a vertical direction may be greater than the length of the inner gasket in the vertical direction.

In some embodiments, the length of the second case in the vertical direction may be greater than the length of the outer gasket in the vertical direction.

In some embodiments, the length of the outer gasket in the vertical direction may be greater than the length of the first case in the vertical direction.

In some embodiments the first case configured to cover the first surface of the electrode assembly and the second case is configured to accommodate the electrode assembly.

In some embodiments, the first case and the second case may be formed as conductors and may have different polarities.

In some embodiments, the insulating gasket may include an inner gasket abutting an inner surface of the second case, an outer gasket abutting an outer surface of the second case, and a connection gasket interconnecting the inner gasket and the outer gasket.

In some embodiments, the first case may include a first case body formed to allow a first connection tab connected to the first electrode plate to be electrically connected thereto and to cover the first surface of the electrode assembly and a first extension member extending away from the edge of the first case body to be located outside the outer gasket.

In some embodiments, the second case may include a second case body formed to allow a second connection tab connected to the second electrode plate to be electrically connected thereto and to cover the second surface of the electrode assembly and a second extension member extending away from the edge of the second case body to be located between the outer gasket and the inner gasket.

In some embodiments, the length of the second extension member in a vertical direction may be greater than the length of the outer gasket in the vertical direction.

In some embodiments, the length of the outer gasket in the vertical direction may be greater than the length of the first extension member in the vertical direction.

In some aspects, methods of manufacturing a secondary battery are generally described. In some embodiments, the method comprises: mounting a first case such that it surrounds a first surface of an electrode assembly, the electrode assembly comprising a first electrode plate and a second electrode plate, wherein the first case is further mounted such that it electrically connects to the first electrode plate; mounting a second case such that it surrounds a second surface opposite the first surface of the electrode assembly, and further such that it electrically connects to the second electrode plate; and providing an insulating gasket located between the first case and the second case, the insulating gasket comprises an insulative material such that electrical connection between the first case and the second case is blocked.

In some embodiments, the insulating gasket is provided in a shape surrounding a first end portion of the second case to block electrical connection between the first case and the second case.

In some embodiments, the method comprises the steps: welding a first connection tab to the first case such that the first connection tab connects to the first electrode plate and extends away from the electrode assembly and/or in a direction towards the first case, and electrically connects the first case to the first electrode plate; and welding a second connection tab to the second case such that the second connection tab connects to the second electrode plate and extends below the electrode assembly and/or in a direction towards the second case, and electrically connects the second case to the second electrode plate.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIGS. 1 and 2 are, respectively, a perspective view and a cross-sectional view showing an exemplary secondary battery according to some embodiments of the present disclosure;
FIG. 3 is a cross-sectional view showing the configuration of the exemplary secondary battery according to some embodiments of the present disclosure in an exploded manner;
FIG. 4 is an exploded perspective view of the exemplary secondary battery according to some embodiments of the present disclosure;
FIG. 5 is a cross-sectional view of an exemplary electrode assembly according to some embodiments of the present disclosure;
FIG. 6 is a perspective view showing an exemplary insulating gasket according to some embodiments of the present disclosure;
FIG. 7 is a cross-sectional view showing the exemplary insulating gasket according to some embodiments of the present disclosure;
FIG. 8 is a perspective view showing an exemplary secondary battery according to some embodiments of the present disclosure;
FIG. 9 is an exploded perspective view of the exemplary secondary battery according to some embodiments of the present disclosure;
FIGS. 10A and 10B are perspective views showing a battery pack including the exemplary secondary battery according to some embodiments of the present disclosure; and
FIGS. 11A and 11B are, respectively, a perspective view and a side view showing vehicles including the exemplary battery pack according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

In addition, the terms "comprise" or "include" and/or "comprising" or "including," when used in this specification, specify the presence of stated shapes, numbers, steps, operations, members, elements, and/or groups thereof, but do not preclude the presence or addition of one or more other shapes, numbers, steps, operations, members, elements, and/or groups thereof.

Additionally, for the purpose of facilitating an understanding of the invention, the attached drawings are not depicted to actual scale; dimensions of some components may be exaggerated for clarity. Also, identical components in different embodiments may be denoted with the same reference numerals.

When two objects of comparison are referred to as being the same, it means the two objects are "substantially the same." Thus, substantially the same may include a deviation that is considered low in the art, for example, a deviation of less than 5%. In addition, when a parameter is said to be uniform in a certain region, it may mean that the parameter is uniform from an average perspective.

Although "first," "second," and the like are used to describe various components, these components are of course not limited by these terms. These terms are only used to distinguish one component from other components, and unless otherwise stated, a first component could be termed a second component.

Throughout the specification, unless specifically stated otherwise, each component may be singular or plural.

When an arbitrary element is referred to as being "disposed above (or below)" or "disposed on (or under)" a component, it may mean not only that the arbitrary element is disposed in contact with an upper surface (or lower surface) of the component, but also that other elements may be interposed between the component and the arbitrary element disposed on (or under) the component.

When a component is described as being "connected," "coupled," or "joined" to another component within this patent document, it is understood that the components may be directly connected or joined to each other. However, it should also be interpreted that an intervening component may be interposed between them, or that each component may be "connected, " "coupled, " or "joined" through another intermediary component. Furthermore, when one part is described as being electrically connected (electrically coupled) to another, this encompasses not only a direct connection but also includes scenarios where other elements are positioned in between, facilitating an indirect connection.

Throughout this specification, the term 'A and/or B' should be interpreted as meaning either A, B, or both A and B, unless an alternative interpretation is explicitly stated. Thus, 'and/or' encompasses any and all possible combinations of the items listed. Similarly, when 'C to D' is mentioned, it is understood to mean C or more, up to and including D, unless noted otherwise. The terminology employed herein is intended solely for describing specific embodiments and should not be regarded as limiting the scope of this disclosure.

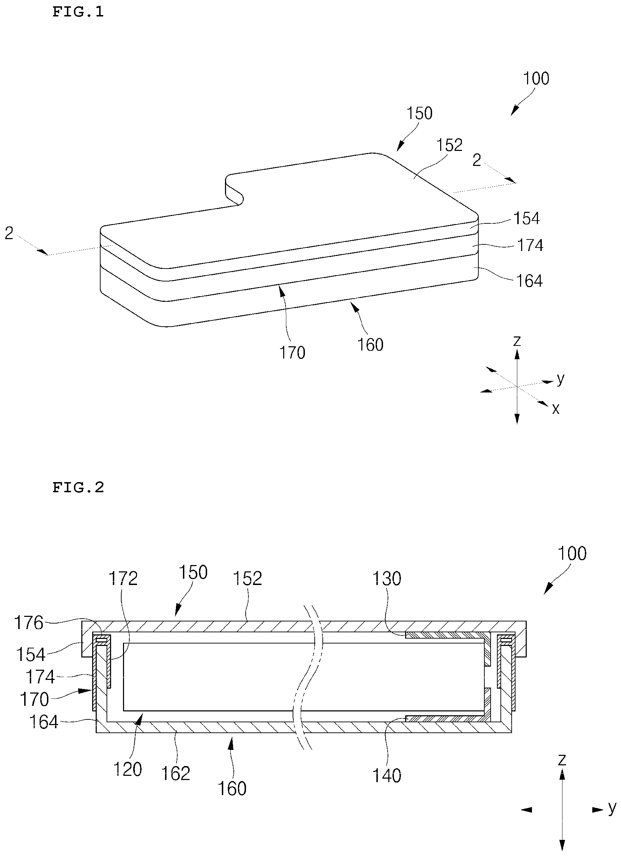

FIGS. 1 and 2 are, respectively, a perspective view and a cross-sectional view showing an exemplary secondary battery 100 according to some embodiments of the present disclosure. FIG. 2 is a cross-sectional view taken along line 2-2 in FIG. 1. As shown in FIGS. 1 and 2, the exemplary secondary battery 100 according to some embodiments of the present disclosure may include an electrode assembly 120, a first case 150, a second case 160, and an insulating gasket 170. In some examples, the exemplary secondary battery 100 according to the present disclosure may further include at least one of a first connection tab 130 or a second connection tab 140. In the present disclosure, the secondary battery 100 may be referred to as a battery.

The first case 150 and the second case 160 may be mounted with the insulating gasket 170 interposed therebetween, and may serve to accommodate the electrode assembly 120 and an electrolyte and/or to define the external appearance of the secondary battery 100. Each of the first case 150 and the second case 160 may include or be referred to as a can, a housing, or an exterior body. The first case 150 and the second case 160 may include metal, such as steel, stainless steel (SUS), nickel-plated steel, a steel alloy, aluminum, an aluminum alloy, and/or deep-drawing cold-rolled steel (SPCE), and/or a laminated film or plastic comprising a pouch. At least one of the first case 150 or the second case 160 may be provided with a beading portion (not shown) that is depressed inwardly. The beading portion may protrude toward the interior of the first case 150 and the second case 160 to suppress movement of the electrode assembly 120.

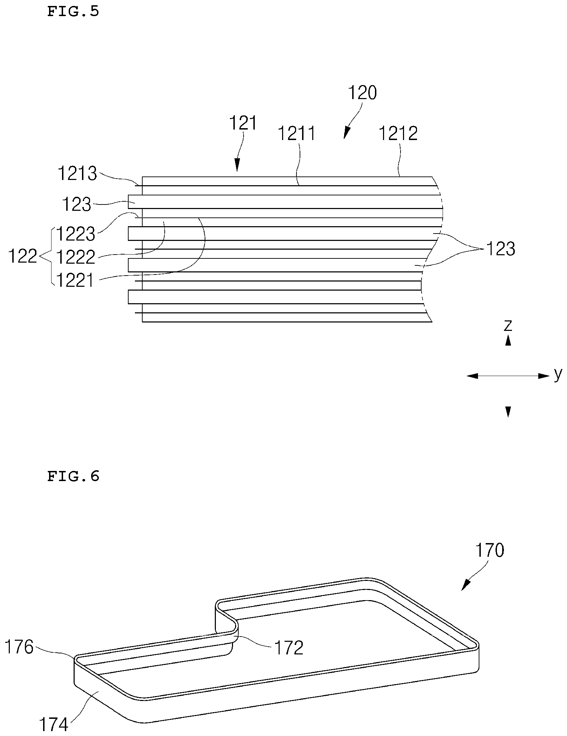

The electrode assembly 120 may be accommodated together with an electrolyte in a space defined by the first case 150 and the second case 160. The electrode assembly 120 may include or be referred to as an electrode group, an electrode body, or a jellyroll. The electrode assembly 120 may include a first electrode plate 121, a second electrode plate 122, and a separator 123 (as shown in FIG. 5) interposed between the first electrode plate 121 and the second electrode plate 122. The components of the electrode assembly 120 may be stacked in a plate shape. The electrode assembly 120 may be formed in various configurations, for example, a stacked configuration or a cylindrically wound configuration. The electrode assembly 120 may be configured such that the first electrode plate 121, the separator 123, and the second electrode plate 122 are stacked in that order. In some embodiments, the electrode assembly 120 may be configured such that the first electrode plate 121, the second electrode plate 122, and the separator 123, each of which has a plate shape including a small-width portion and a large-width portion consecutively connected to each other, are stacked.

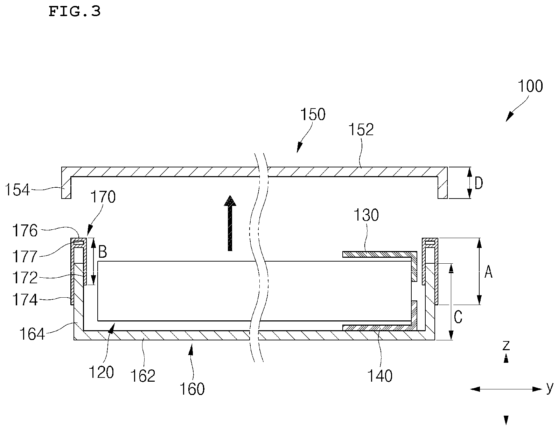

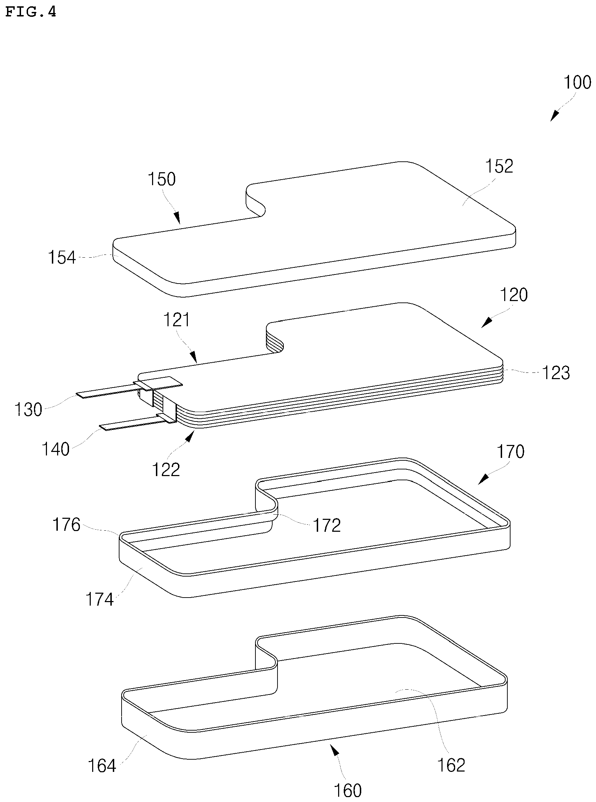

FIG. 3 is a cross-sectional view showing the configuration of the exemplary secondary battery 100 according to some embodiments of the present disclosure in an exploded manner, FIG. 4 is an exploded perspective view of the exemplary secondary battery 100 according to some embodiments of the present disclosure, and FIG. 5 is a cross-sectional view of the exemplary electrode assembly 120 according to some embodiments of the present disclosure. As shown in FIGS. 3 to 5, the first electrode plate 121 may include a first substrate 1211 and a first active material layer 1212 located on the first substrate 1211. The first substrate 1211 may include a first uncoated portion or a first tab 1213 on which the first active material layer 1212 is not located. The first uncoated portion or the first tab 1213 of the first substrate 1211 may extend outward (e.g., in a lateral direction), and the first tab 1213 may be electrically connected to the first connection tab 130. In some embodiments of the present disclosure, the first tab 1213 may be referred to as a first uncoated portion or a positive electrode substrate tab.

The second electrode plate 122 may include a second substrate 1221 and a second active material layer 1222 located on the second substrate 1221. The second substrate 1221 may include a second uncoated portion or a second tab 1223 on which the second active material layer 1222 is not located. The second uncoated portion or the second tab 1223 of the second substrate 1221 may extend outward (e.g., in a lateral direction), and the second tab 1223 may be electrically connected to the second connection tab 140. In some embodiments, the first tab 1213 and the second tab 1223 may be implemented in various forms, for example, may extend in the same direction or may extend in different directions. In some embodiments of the present disclosure, the second tab 1223 may be referred to as a second uncoated portion or a negative electrode substrate tab.

The first electrode plate 121 may function as a positive electrode. In this case, the first substrate 1211 may be formed as, for example, an aluminum foil, and the first active material layer 1212 may include, for example, a transition metal oxide. The second electrode plate 122 may function as a negative electrode. In this case, the second substrate 1221 may be formed as, for example, a copper foil and/or a nickel foil, and the second active material layer 1222 may include, for example, graphite and/or silicone.

The separator 123 may prevent short circuit between the first electrode plate 121 and the second electrode plate 122 while allowing lithium ions to move therebetween. In some embodiments, the separator 123 may be located on each of two opposite side surfaces of the first electrode plate 121 or may be located on each of two opposite side surfaces of the second electrode plate 122.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNl_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoGₑO₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li(3-f)Fe2(PO4)3(0≤f≤2); LiaFePO4(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂boehmite, and combinations thereof but is not limited thereto.

The organic material and the inorganic material may be mixed in one coating layer or may be in the form of a coating layer containing an organic material and a coating layer containing an inorganic material that are laminated on each other.

The first connection tab 130 may be connected to the first electrode plate 121, and may extend above the electrode assembly 120 and/or in a direction towards the first case such that the first connection tab 130 is electrically connected to the first case 150. The first connection tab 130 may be electrically connected to the first tab 1213 provided at the first electrode plate 121. One side of the first connection tab 130 may be electrically connected to the first electrode plate 121 of the electrode assembly 120, and the other side of the first connection tab 130 may be fixed to the inner surface of the first case 150. The first connection tab 130 may be fixed to the first case 150 through welding. The first connection tab 130 may be connected to one side (left side in FIG. 4) of the first electrode plate 121 in the longitudinal direction (e.g., in a direction parallel to the maximum dimension of the first electrode plate 121) of the first electrode plate 121. In some embodiments, the first connection tab 130 may be a strip-shaped conductor. A plurality of first tabs 1213 extending and/or protruding from the electrode assembly 120 may be electrically connected to one side of the first connection tab 130.

The first connection tab 130 may include copper, a copper alloy, nickel, a nickel alloy, aluminum, and/or an aluminum alloy. In some embodiments, the first connection tab 130 may be bent above the electrode assembly 120 to be fixed to the inner side of a first case body 152 through welding. Thus, the first electrode plate 121 and the first case 150 may have the same polarity.

The second connection tab 140 may be connected to the second electrode plate 122, and may extend below the electrode assembly 120 and/or in a direction towards the second case such that the second connection tab 140 is electrically connected to the second case 160. The second connection tab 140 may be electrically connected to the second tab 1223 provided at the second electrode plate 122. One side of the second connection tab 140 may be electrically connected to the second electrode plate 122 of the electrode assembly 120, and the other side of the second connection tab 140 may be fixed to the inner surface of the second case 160. The second connection tab 140 may be fixed to the second case 160 through welding. The second connection tab 140 may be connected to one side (left side in FIG. 4) of the second electrode plate 122 in the longitudinal direction of the second electrode plate 122. In some embodiments, the second connection tab 140 may be a strip-shaped conductor. A plurality of second tabs 1223 extending and/or protruding from the electrode assembly 120 may be electrically connected to one side of the second connection tab 140.

The second connection tab 140 may include copper, a copper alloy, nickel, a nickel alloy, aluminum, and/or an aluminum alloy. In some embodiments, the second connection tab 140 may be bent below the electrode assembly 120 to be fixed to the inner side of a second case body 162 through welding. Thus, the second electrode plate 122 and the second case 160 may have the same polarity.

The first case 150 may be variously modified, so long as the first case 150 is mounted in a shape surrounding one surface of the electrode assembly 120 and is electrically connected to the first electrode plate 121. In some embodiments, the first case 150 may cover the upper side of the electrode assembly 120 and may be electrically connected to the first electrode plate 121. The first case 150 according to an embodiment of the present disclosure may include a first case body 152 and a first extension member 154. The first case body 152 may be variously modified, so long as the first connection tab 130 connected to the first electrode plate 121 is electrically connected to the first case body 152, and the first case body 152 covers the upper side of the electrode assembly 120. The first extension member 154 may extend downward from the edge of the first case body 152 (e.g., away from the edge of the first case body 152 and/or towards the electrode assembly 120) and may be located outside an outer gasket 174. The shape of the first case 150 and the shape of the second case 160 may correspond to each other. The first case 150 may include a small-width portion and a large-width portion, which are connected to each other to form one part. The first case body 152 may have a plate shape. The width of one side of the first case body 152 in the longitudinal direction thereof may be smaller than the width of the opposite side of the first case body 152 in the longitudinal direction thereof. The first extension member 154 may be formed along the edge of the first case body 152 (e.g., along a perimeter of the first case body 152) and may extend downward therefrom (e.g., away from the edge of the first case body 152 and/or towards the electrode assembly 120). The first case 150 may have an open lower side and may be mounted so as to surround the upper side of the electrode assembly 120. The first case 150 may be mounted in contact with the outer surface of the insulating gasket 170. The first case 150 may include at least one of aluminum, steel, stainless steel, injection-molded plastic, a polymer composite material, and/or glass fiber reinforced plastic.

The second case 160 may be variously modified, so long as the second case 160 is mounted in a shape surrounding the opposite surface of the electrode assembly 120 and is electrically connected to the second electrode plate 122. In some embodiments, the second case 160 may cover the lower side of the electrode assembly 120 and may be electrically connected to the second electrode plate 122. The second case 160 may be variously modified, so long as the second case 160 accommodates the electrode assembly 120 and the upper side thereof is covered by the first case 150. The second case 160 may be located beneath the first case 150 and/or disposed on the first case 150, and the upper end portion of the second case 160 may be located inside the first case 150. The first case 150 and the second case 160 may be formed as conductors and may have different polarities.

The second case 160 according to some embodiments of the present disclosure may include a second case body 162 and a second extension member 164. The second case body 162 may be variously modified, so long as the second connection tab 140 connected to the second electrode plate 122 is electrically connected to the second case body 162, and the second case body 162 covers the lower side of the electrode assembly 120. The second extension member 164 may extend upward from the edge of the second case body 162 and may be located between the outer gasket 174 and an inner gasket 172.

The second case 160 may include a small-width portion and a large-width portion, which are connected to each other to form one part. The second case body 162 may have a plate shape. The width of one side of the second case body 162 in the longitudinal direction thereof may be smaller than the width of the opposite side of the second case body 162 in the longitudinal direction thereof. The second extension member 164 may be formed along the edge of the second case body 162 and may extend upward therefrom. The second case 160 may have an open upper side and may be mounted so as to surround the lower side of the electrode assembly 120. The second extension member 164 of the second case 160 may be mounted so as to be inserted into the insulating gasket 170. The second case 160 may include at least one of aluminum, steel, stainless steel, injection-molded plastic, a polymer composite material, and/or glass fiber reinforced plastic.

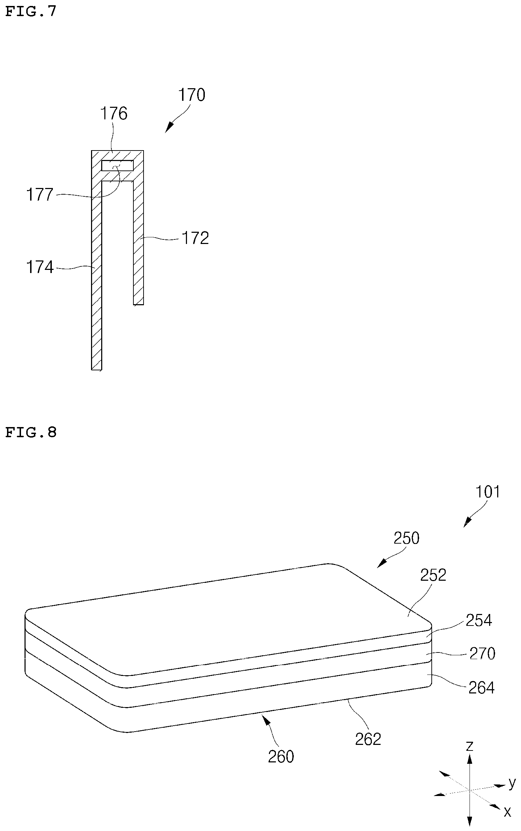

FIG. 6 is a perspective view showing the exemplary insulating gasket 170 according to the present disclosure, and FIG. 7 is a cross-sectional view showing the exemplary insulating gasket 170 according to the present disclosure. As shown in FIGS. 4, 6, and 7, the insulating gasket 170 may be mounted in an interference fit manner between the first case 150 and the second case 160, which are conductors, thereby blocking electrical connection between the first case 150 and the second case 160. The first connection tab 130 and the second connection tab 140 may be connected to the first case 150 and the second case 160, respectively, which are electrically disconnected from each other. The insulating gasket 170 may be variously modified, so long as the insulating gasket 170 is located between the first case 150 and the second case 160 and is made of an insulative material to block electrical connection between the first case 150 and the second case 160. In some embodiments, the insulating gasket 170 may be mounted in a shape surrounding the upper end portion of the second case 160, thereby blocking electrical connection between the first case 150 and the second case 160. Because the insulating gasket 170 is mounted so as to surround the upper end portion of the second case 160 and the first case 150 is mounted outside the insulating gasket 170, it may be possible to prevent the occurrence of short circuit between the first case 150 and the second case 160. In some embodiments, the insulating gasket 170 may include an inner gasket 172 abutting the inner surface of the second case 160, an outer gasket 174 abutting the outer surface of the second case 160, and a connection gasket 176 interconnecting the inner gasket 172 and the outer gasket 174.

The insulating gasket 170 may include an insulative material to block electrical connection. The insulating gasket 170 may use polypropylene (PP) as a base material and may use polybutylene terephthalate (PBT) for heat resistance. In some embodiments, the insulating gasket 170 may include polypropylene, polyethylene, and/or ethylene propylene diene terpolymer (EPDM), none of which reacts with the electrolyte. Further, the insulating gasket 170 may include at least one of polyimide, Teflon, and/or polyester.

Polyimide has excellent heat resistance and electrical insulation performance and is chemically stable, so the same exhibits excellent insulation performance in the chemical environment in a battery. Teflon has relatively high heat resistance, is chemically stable, and has excellent electrical insulation performance. Polyethylene is relatively flexible and has good electrical insulation performance and durability. Polyester has excellent durability and is electrically and chemically stable. Polypropylene is an economical and durable material. EPDM is a thermally and chemically stable rubber that is mainly used as an insulating and sealing material.

The outer gasket 174 and the inner gasket 172 may extend in the vertical direction. The upper end of the outer gasket 174 and the upper end of the inner gasket 172 may face each other and may be connected to each other via the connection gasket 176. The insulating gasket 170 may have an inverted U-shaped longitudinal-section (e.g., a U-shaped cross-section) having an open lower side. The insulating gasket 170 may be elastic, and may be mounted so as to surround the upper end portion of the second case 160. In some embodiments, the length A of the outer gasket 174 in the vertical direction may be greater than the length B (as shown in FIG. 3) of the inner gasket 172 in the vertical direction. The outer gasket 174 may prevent contact between the first extension member 154 of the first case 150 and the second extension member 164 of the second case 160. In some embodiments, the length C of the second case 160 in the vertical direction may be greater than the length A of the outer gasket 174 in the vertical direction. This may mean that the length of the second extension member 164 in the vertical direction is greater than the length A of the outer gasket 174 in the vertical direction. Thus, it may be possible to prevent the lower end of the outer gasket 174 from protruding downward below the second case 160. In some embodiments, the length A of the outer gasket 174 in the vertical direction may be greater than the length D of the first case 150 in the vertical direction. This may mean that the length A of the outer gasket 174 in the vertical direction is greater than the length of the first extension member 154 in the vertical direction. If the length D of the first case 150 in the vertical direction is greater than the length A of the outer gasket 174 in the vertical direction, the first case 150 may face the second case 160, and a short circuit may occur therebetween. In some embodiments, it may be possible to ensure electrical safety by setting the length A of the outer gasket 174 in the vertical direction to be greater than the length D of the first case 150 in the vertical direction.

The insulating gasket 170 may be compressed by movement of the first case 150, and thus the gap between the first case 150 and the second case 160 may be shielded, whereby leakage of the electrolyte may be prevented.

Because the upper end portion of the second extension member 164 provided at the second case 160 is inserted into the space defined between the inner gasket 172 and the outer gasket 174, the insulating gasket 170 may be secured to the second case 160. Electrical connection between the second connection tab 140 and the second case 160 may be achieved in a state in which the electrode assembly 120 is accommodated in the second case 160. In some embodiments, after electrical connection between the second connection tab 140 and the second case 160 is established, the electrode assembly 120 may be accommodated in the second case 160.

The first case 150 may move downward (e.g., a direction towards the electrode assembly 120 and/or second case 160) while surrounding the upper side of the electrode assembly 120 and may press (e.g., compress) the insulating gasket 170. The first case 150 may be located outside the outer gasket 174 in an interference fit manner while compressing the outer gasket 174 of the insulating gasket 170.

Electrical connection between the first connection tab 130 and the first case 150 may be established in a state in which the electrode assembly 120 is accommodated in the first case 150. In other embodiments, after electrical connection between the first connection tab 130 and the first case 150 is achieved, the electrode assembly 120 may be accommodated in the first case 150. Because the first case 150 and the second case 160 are mounted in an interference fit manner with the insulating gasket 170 interposed therebetween, the occurrence of short circuit due to contact therebetween may be prevented.

The insulating gasket 170 may be fixed to the end portion of the second case 160 through interference fit, an adhesive, a fastening member, thermal bonding, mechanical coupling, chemical coupling, and/or the like.

The connection gasket 176 may be variously modified, so long as the connection gasket 176 interconnects the upper side of the inner gasket 172 and the upper side of the outer gasket 174. The connection gasket 176 according to some embodiments of the present disclosure may include an inner chamber 177, which is a space for impact absorption. The inner chamber 177 may define a single space or a plurality of partitioned spaces inside the connection gasket 176, and may be mounted between the second case 160 and the first case 150. Because impact transmitted to the first case 150 is absorbed by the inner chamber 177 formed in the insulating gasket 170, the durability of the secondary battery 100 may be improved.

In the secondary battery 100 according to some embodiments of the present disclosure having the above configuration, external terminals are eliminated and/or significantly reduced and the first case 150 and the second case 160 have different polarities, and accordingly, the number of parts and production costs may be reduced. The first case 150 and the second case 160 may be directly connected to external terminals, and thus the freedom of design may be increased.

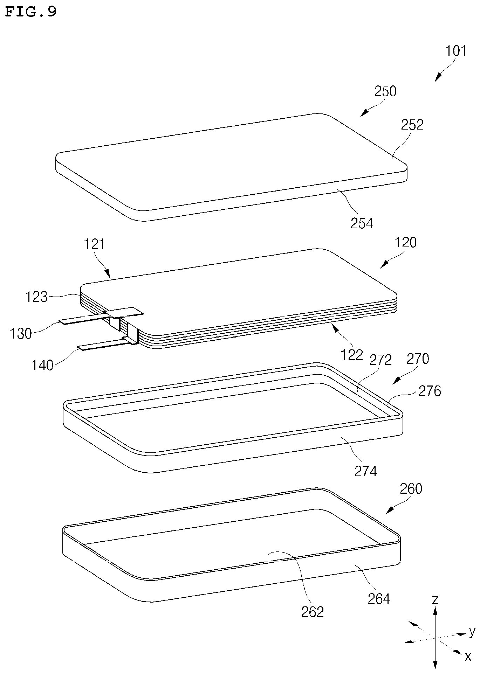

FIG. 8 is a perspective view showing an exemplary secondary battery 101 according to some embodiments of the present disclosure, and FIG. 9 is an exploded perspective view of the exemplary secondary battery 101 according to the present disclosure. As shown in FIGS. 8 and 9, the secondary battery 101 according to another embodiment of the present disclosure may include an electrode assembly 120, a first connection tab 130, a second connection tab 140, a first case 250, a second case 260, and an insulating gasket 270. The first case 250, the second case 260, and the insulating gasket 270 of the secondary battery 101 according to the other embodiment of the present disclosure may be modified to have a rectangular shape, but the functions thereof are identical to the functions of those of the secondary battery 100 according to the above-described embodiment of the present disclosure. Thus, detailed description thereof will be omitted, and the same components are denoted by the same reference numerals.

The electrode assembly 120 may be accommodated together with an electrolyte in a space defined by the first case 250 and the second case 260. The electrode assembly 120 may include a first electrode plate 121, a second electrode plate 122, and a separator 123 interposed between the first electrode plate 121 and the second electrode plate 122. The components of the electrode assembly 120 may be stacked in a plate shape. The electrode assembly 120 may be configured such that the first electrode plate 121, the separator 123, and the second electrode plate 122 are stacked in that order. In some embodiments, the electrode assembly 120 may be configured such that the first electrode plate 121, the second electrode plate 122, and the separator 123, each of which has a substantially rectangular plate shape, are stacked.

The first case 250 may be a rectangular cover having an open lower side to accommodate the electrode assembly 120. The second case 260 may be a rectangular container having an open upper side to accommodate the electrode assembly 120.

The first case 250 according to the other embodiment of the present disclosure may include a first case body 252 and a first extension member 254. The first case body 252 may be a rectangular panel, to which the first connection tab 130 connected to the first electrode plate 121 may be electrically connected. The first extension member 254 may extend downward from the edge of the first case body 252 (e.g., away from the edge of the first case body 252 and/or towards the electrode assembly 120) and may be located outside an outer gasket 274. The first case 250 and the second case 260 may have shapes corresponding to each other.

The second case 260 according to the other embodiment of the present disclosure may include a second case body 262 and a second extension member 264. The second case body 262 may be a rectangular panel, to which the second connection tab 140 connected to the second electrode plate 122 may be electrically connected. The second extension member 264 may extend upward from the edge of the second case body 262 and may be located outside the outer gasket 274.

The insulating gasket 270 may be formed in a rectangular frame shape corresponding to the shape of the first case 250. The insulating gasket 270 may include an inner gasket 272 abutting the inner surface of the second case 260, an outer gasket 274 abutting the outer surface of the second case 260, and a connection gasket 276 interconnecting the inner gasket 272 and the outer gasket 274. The inner gasket 272, the outer gasket 274, and the connection gasket 276 may be formed in a rectangular shape.

The above-described embodiments of the present disclosure may be variously modified, so long as electrical connection between the first case 150 or 250 and the second case 160 or 260 is blocked by the insulating gasket 170 or 270, the first connection tab 130 is directly connected to the first case 150 or 250, and the second connection tab 140 is directly connected to the second case 160 or 260.

The batteries according to the above-described embodiments may be used to manufacture a battery pack.

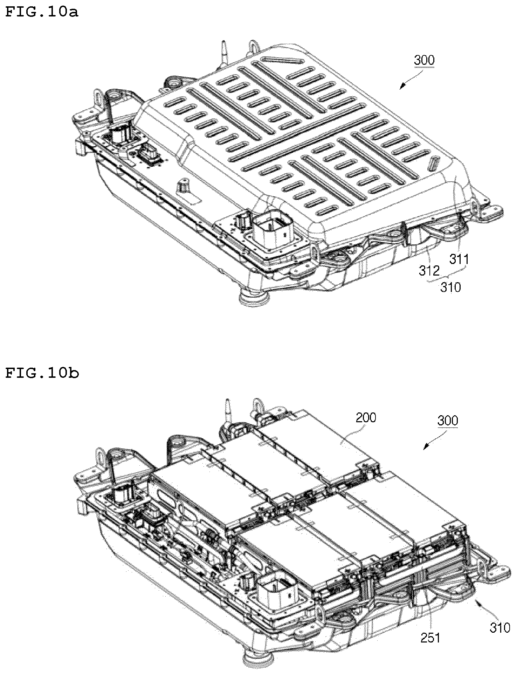

FIGS. 10A and 10B are perspective views showing a battery pack including the exemplary secondary battery 100 or 101 according to the present disclosure. Referring to FIGS. 10A and 10B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

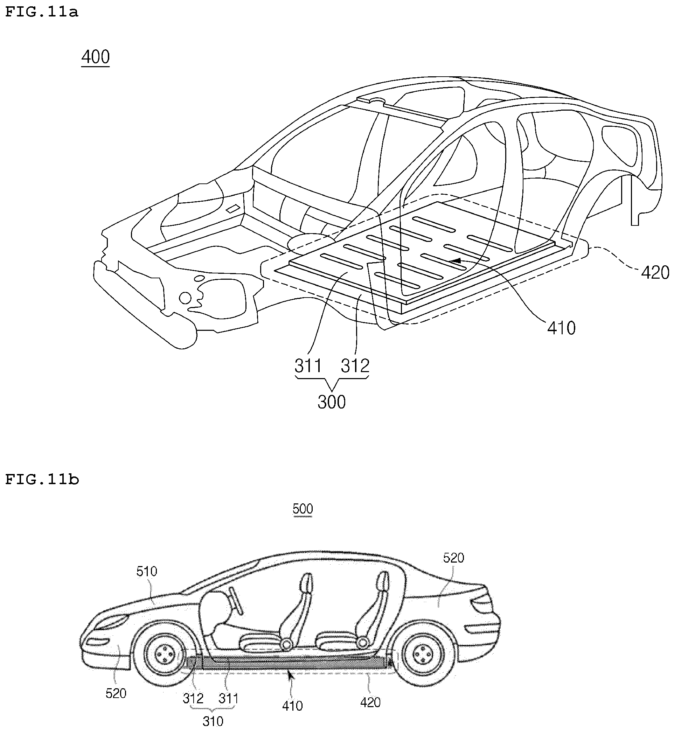

FIGS. 11A and 11B are, respectively, a perspective view and a side view showing vehicles 400 and 500 including the exemplary battery pack 300 according to the present disclosure.

In FIG. 11A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 11B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body part 400.

As is apparent from the above description, according to the present disclosure, because external terminals are eliminated and a first case and a second case have different polarities, the number of parts and production costs may be reduced.

According to the present disclosure, the first case and the second case may be connected to external terminals, and thus the freedom of design may be increased.

However, the effects achievable through the present invention are not limited to those described above, and other technical effects not mentioned can be clearly understood by those skilled in the art from the description of the invention provided below.

Although a few embodiments of the present disclosure have been shown and described, it would be appreciated by those skilled in the art that various changes and modifications may be made in this embodiment without departing from the principles of the disclosure, the scope of which is defined in the appended claims and their equivalents.

## Claims

1. A secondary battery (100) comprising:
an electrode assembly (120) comprising a first electrode plate (121) and a second electrode plate (122);
a first case (150) surrounding a first surface of the electrode assembly (120) and electrically connected to the first electrode plate (121);
a second case (160) surrounding a second surface of the electrode assembly (120) and electrically connected to the second electrode plate; wherein the second surface of the electrode assembly (120) is opposite the first surface; and
an insulating gasket (170) located between the first case (150) and the second case (160), the insulating gasket (170) comprising an insulative material, wherein electrical connection between the first case (150) and the second case (160) is blocked.

2. The secondary battery (100) as claimed in claim 1, further comprising:
a first connection tab (130) connected to the first electrode plate (121) and extending above the electrode assembly (120) and/or in a direction towards the first case (150), such that the first connection tab (130) is electrically connected to the first case (150); and
a second connection tab (140) connected to the second electrode plate (122) and extending below the electrode assembly (120) and/or in a direction towards the second case (160) such that the second connection tab (140) is electrically connected to the second case (160).

3. The secondary battery (100) as claimed in claim 2, wherein a) the first connection tab (130) is connected to one side of the first electrode plate (121) in a longitudinal direction of the first electrode plate (121), and
wherein the second connection tab (140) is connected to one side of the second electrode plate (122) in a longitudinal direction of the second electrode plate (122); and/or
b) the first connection tab (130) is welded to the first case (150), and the second connection tab (140) is welded to the second case (160).

4. The secondary battery (100) according to any of the previous claims, wherein the second case (160) is disposed on the first case (150), and a first end portion of the second case (160) is located inside the first case (150).

5. The secondary battery as claimed in claim 4, wherein the insulating gasket (170) surrounds the first end portion of the second case (160) to block electrical connection between the first case (150) and the second case (160).

6. The secondary battery (100) according to any of the previous claims, wherein the insulating gasket (170) comprises:
an inner gasket (172) abutting an inner surface of the second case (160);
an outer gasket (174) abutting an outer surface of the second case (160); and
a connection gasket (176) interconnecting the inner gasket (172) and the outer gasket (174).

7. The secondary battery (100) according to the previous claim, wherein a length of the outer gasket (174) in a vertical direction is greater than a length of the inner gasket (172) in the vertical direction; and/or
wherein a length of the second case (160) in a vertical direction is greater than a length of the outer gasket (174) in the vertical direction; and/or
wherein the length of the outer gasket (174) in the vertical direction is greater than a length of the first case (150) in the vertical direction;
the vertical direction being a direction of the normal vector of the first and/or second surface of the electrode assembly (120).

8. The secondary battery (100) according to any of the previous claims, wherein the first case (150) is configured to cover the first surface of the electrode assembly (120);
and wherein the second case (160) is configured to accommodate the electrode assembly (120).

9. The secondary battery (100) according to any of the previous claims, wherein the first case (150) and the second case (160) are formed as conductors and have different polarities.

10. The secondary battery (100) according to claims 2 and 6, wherein a) the first case (150) comprises:
a first case body (152) formed to allow the first connection tab (130) connected to the first electrode plate (121) to be electrically connected thereto and to cover the first surface of the electrode assembly (120); and
a first extension member (154) extending away from an edge of the first case body (152) to be located outside the outer gasket (174); and/or
wherein b) the second case (160) comprises:
a second case body (162) formed to allow the second connection tab (140) connected to the second electrode plate (122) to be electrically connected thereto and to cover the second surface of the electrode assembly (120); and
a second extension member (164) extending away from an edge of the second case body (162) to be located between the outer gasket (174) and the inner gasket (172).

11. The secondary battery according to claim 10, wherein a length of the second extension member (164) in a vertical direction is greater than a length of the outer gasket (174) in the vertical direction, the vertical direction being a direction of the normal vector of the first and/or second surface of the electrode assembly (120).

12. The secondary battery according to any of claims 10 or 11, wherein a length of the outer gasket (174) in a vertical direction is greater than a length of the first extension member (154) in the vertical direction, the vertical direction being a direction of the normal vector of the first and/or second surface of the electrode assembly (120).

13. A method of manufacturing a secondary battery (100), the method comprising:
mounting a first case (150) such that it surrounds at least a first surface of an electrode assembly (120), the electrode assembly (120) comprising a first electrode plate (121) and a second electrode plate (122), wherein the first case (150) is further mounted such that it is electrically connected to the first electrode plate (121);
mounting a second case (160) such that it surrounds a second surface opposite the first surface of the electrode assembly (120), and further such that the second case (160) is electrically connected to the second electrode plate (122); and
providing an insulating gasket (170) located between the first case (150) and a second case (160), the insulating gasket (170) comprises an insulative material such that electrical connection between the first case (150) and the second case (160) is blocked.

14. The method of claim 13, wherein the insulating gasket (170) is provided in a shape surrounding a first end portion of the second case (160) to block electrical connection between the first case (150) and the second case (160).

15. The method of claims 13 or 14, comprising the steps:
welding a first connection tab (130) to the first case (150)such that the first connection tab (130) connects to the first electrode plate (121) and extends above the electrode assembly (120) and/or in a direction towards the first case (150), and electrically connects the first case (150) to the first electrode plate (121); and
welding a second connection tab (140) to the second case (160) such that the second connection tab (140) connects to the second electrode plate (122) and extends below the electrode assembly (120) and/or in a direction towards the second case (160), and electrically connects the second case (160) to the second electrode plate (122).
